# EUROPÄISCHE PATENTSCHRIFT

(11) **EP 1 485 621 B1**
(45) Veröffentlichungstag und Bekanntmachung des Hinweises auf die Patenterteilung: **12.10.2005**
(21) Anmeldenummer: 03711913.8
(22) Anmeldetag: 03.03.2003
(51) Int. Cl.: F04C 15/04, F04C 2/344

(54) **SYSTEM ZUR STEUERUNG EINER HYDRAULISCHEN VERSTELLPUMPE**
SYSTEM FOR CONTROLLING A HYDRAULIC FORCE PUMP
SYSTEME DE COMMANDE D'UNE POMPE HYDRAULIQUE A CYLINDREE VARIABLE

(30) Priorität: 06.03.2002 DE 10209880
(43) Veröffentlichungstag der Anmeldung: 15.12.2004
(73) Patentinhaber: ZF Lenksysteme GmbH, 73527 Schwäbisch Gmünd (DE)
(72) Erfinder: SCHMID, Johannes, 73527 Schwäbisch Gmünd (DE)
(86) Internationale Anmeldenummer: PCT/EP2003/002138
(87) Internationale Veröffentlichungsnummer: WO 2003/074877

(56) Entgegenhaltungen:
- DE-A- 3 214 212
- GB-A- 913 197
- US-A- 4 678 412

## Beschreibung

Die Erfindung betrifft ein System zur Steuerung einer hydraulischen Verstellpumpe für Verbraucher gemäß dem Oberbegriff des Anspruches 1.

In der Praxis wird in Arbeitssystemen mit hydraulischen Verbrauchern, so beispielsweise bei Servolenkeinrichtungen von Kraftfahrzeugen, üblicherweise mit Konstantpumpen gearbeitet und es werden durch den Antrieb der Pumpe über die Brennkraftmaschine des Fahrzeuges drehzahlbedingt anfallende Überschussmengen entspannt und auf die Saugseite der Pumpe zurückgeleitet, womit insbesondere bei höheren Drehzahlen erhebliche Verluste und Wärmebelastungen verbunden sind. Diese werden aber in Kauf genommen, um im Bedarfsfall jederzeit schlagartig auch dem maximalen Verbraucherbedarf entsprechende, große Volumenströme zur Verfügung zu haben und damit eine verzögerungsfreie Beaufschlagung der jeweiligen hydraulischen Verbraucher, so beispielsweise bei Servolenksystemen der die Lenkkraft verstärkenden Stellzylinder, sicherzustellen. Der Einsatz hydraulischer Verstellpumpen, der sich zur Anpassung des Fördervolumens an den jeweiligen Bedarf im Hinblick auf die damit mögliche Reduzierung der Verlustleistung an sich anbieten würde, ist bislang in der Praxis daran gescheitert, dass die Verstelldynamik der Pumpen zur Erhöhung des Fördervolumens den Anforderungen nicht immer gerecht wird, was unter Komfort- und auch Sicherheitsgesichtspunkten zu kritischen Zuständen führen kann.

Bei einem aus der DE 197 22 495 A1 bekannt gewordenen, mit einer hydraulischen Verstellpumpe arbeitendem System, wie es im Oberbegriff des Anspruches 1 berücksichtigt ist, ist die Verstellpumpe, die als Flügelzellenpumpe ausgebildet ist, in Richtung der Verstellung auf hohe Fördermengen über einen Energiespeicher in Form einer Feder belastet, und in Gegenrichtung hierzu über eine hydraulische Stelleinrichtung, wobei die hydraulische Stelleinrichtung in einem vom druckseitigen Zulauf auf den Verbraucher abgezweigten, Förderübermengen abführenden und auf einen Vorratsbehälter auslaufenden Rücklauf angeschlossen ist. Im Rücklauf liegt in Durchströmungsrichtung gegen den Vorratsbehälter ein Stromregelventil und ausmündend gegen den Vorratsbehälter als Stromventil eine Drossel, und zwischen Stromregelventil und Drossel wird der Steuerdruck für ein Steuerventil abgezweigt, über dessen Steuerschieber der Anschluss der hydraulischen Stelleinrichtung der Verstellpumpe an die hochdruckseitige Verbindung zwischen Pumpe und Verbraucher oder gegen den Vorratsbehälter im Querschnitt gesteuert wird. Eine derartige Steuerung ist verhältnismäßig komplex und die bei dieser Lösung angestrebte, möglichst schlagartige Verstellung der Verstellpumpe im Sinne einer sprunghaften Steigerung des Fördervolumens, bzw. des Systemdruckes ist davon abhängig, dass zunächst durch Anlegen eines Steuerdruckes am Stromregelventil der hochdruckseitige Anschluss der Rücklaufleitung abgesteuert und dadurch der Steuerdruck am Steuerventil abgesenkt wird, um die über das Steuerventil laufende Verbindung der hydraulischen Stelleinrichtung gegen den Vorratsraum zu öffnen und so über den als Feder ausgebildeten Energiespeicher eine entsprechende Verstellung der Pumpe zu erreichen, was in Anbetracht der verschiedenen, anzusteuernden Stellelemente ein spontanes Verstellen der Stellpumpe ebenso ausschließt wie die verlustbehaftete Gestaltung des Abströmweges über das Steuerventil.

Der Erfindung liegt die Aufgabe zugrunde, für ein System zur Steuerung einer hydraulischen Stellpumpe ein vereinfachtes Steuersystem zu schaffen, das ein praktisch schlagartiges Ansprechen in der Umstellung der Verstellpumpe auf höhere, insbesondere maximale Volumenströme, und damit gegebenenfalls auch eine schlagartige Erhöhung des Systemarbeitsdruckes, ermöglicht.

Erreicht wird dies mit den Merkmalen des Anspruches 1, demzufolge der über das Stromventil gesteuerte Abströmquerschnitt der Stelleinrichtung gegen den Vorratsbehälter bei Verstellung der Verstellpumpe auf maximales Fördervolumen derart maximiert ist, dass sich ein quasi ungedrosselter Ablauf ergibt, so dass über den Energiespeicher ein sprunghaftes Umstellen der Verstellpumpe möglich wird, wobei sich im Rahmen der Erfindung für den Energiespeicher eine stets hohe Stellkraft als zweckmäßig erweist, wozu beispielsweise der Energiespeicher durch eine Feder mit hoher Vorspannung gebildet ist, und die Feder zweckmäßigerweise auch eine hohe Federrate aufweist. Für das angestrebte sprunghafte Umstellen erweist es sich im Rahmen der Erfindung als vorteilhaft, wenn das jeweils verdrängte Volumen zum Auffüllen der duch die Umstellung entstehenden Räume genutzt wird, also beispielsweise bezogen auf einen Kolben als Stellglied, das aus dem zylinderseitigen Druckraum verdrängte Volumen auf die Rückseite des Kolbens geleitet wird, wobei eine derartige Kurzschlussverbindung im Regelfall besonders kurze Leitungswege und große Übertrittsquerschnitte ermöglicht.

Bei der im Rahmen der erfindungsgemäßen Lösung mengengeregelten Ansteuerung der hydraulischen Stelleinrichtung wird das Stromventil bevorzugt in Abhängigkeit von verbraucherseitig vorgegebenen Steuerparametern angesteuert, wobei, bezogen auf den beispielsweisen Einsatz des erfindungsgemäßen Systemes bei Fahrzeugen, auch anderweitige, zum Beispiel aus der Fahrdynamik abzuleitende Informationen präventiv berücksichtigt werden können, so dass in der Ansteuerung des Stromventiles gegebenenfalls auch schon zu erwartende Änderung im Bedarfsverhalten des Verbrauchers für die Einstellung der Verstellpumpe antizipierend berücksichtigt werden können.

Im Rahmen der Erfindung kann gegebenenfalls auch das Stromregelventil einstellbar ausgebildet werden, fallweise auch mit einer zusätzlichen Ansteuerung versehen werden, insbesondere im Hinblick auf die Erweiterung des erfindungsgemäßen Grundkonzeptes auf weitere Funktionen.

Als Stromventil kann im Rahmen der Erfindung in einfachster Weise eine verstellbare Drossel Verwendung finden, so dass die Verstellung der Pumpe, oder gegebenenfalls auch deren Einregelung auf andere Stelllagen im Rahmen der Erfindung mit einfachen Mitteln zu erreichen ist.

Für das Stromregelventil erweist sich ein Aufbau mit als Druckwaage arbeitendem Steuerkolben als zweckmäßig, der, den Durchtrittsquerschnitt von der Hochdruckseite zur hydraulischen Stelleinrichtung steuernd, einerseits hochdruckseitig und in Gegenrichtung federbelastet ist, wobei der Federbelastung eine Beaufschlagung mit einem Druck überlagert ist, der dem nachgeordnet zu einer stromab des Stromregelventiles liegenden Messdrossel gegebenen Druck in der über die hydraulische Verstelleinrichtung führenden Leitungsverbindung zwischen Stromregelventil und Stromventil entspricht.

Weitere Einzelheiten und Merkmale der Erfindung ergeben sich aus den Ansprüchen. Ferner wird die Erfindung nachstehend an Hand eines Ausführungsbeispieles erläutert, das schematisiert ein System zur Steuerung einer hydraulischen Verstellpumpe für einen Verbraucher zeigt.

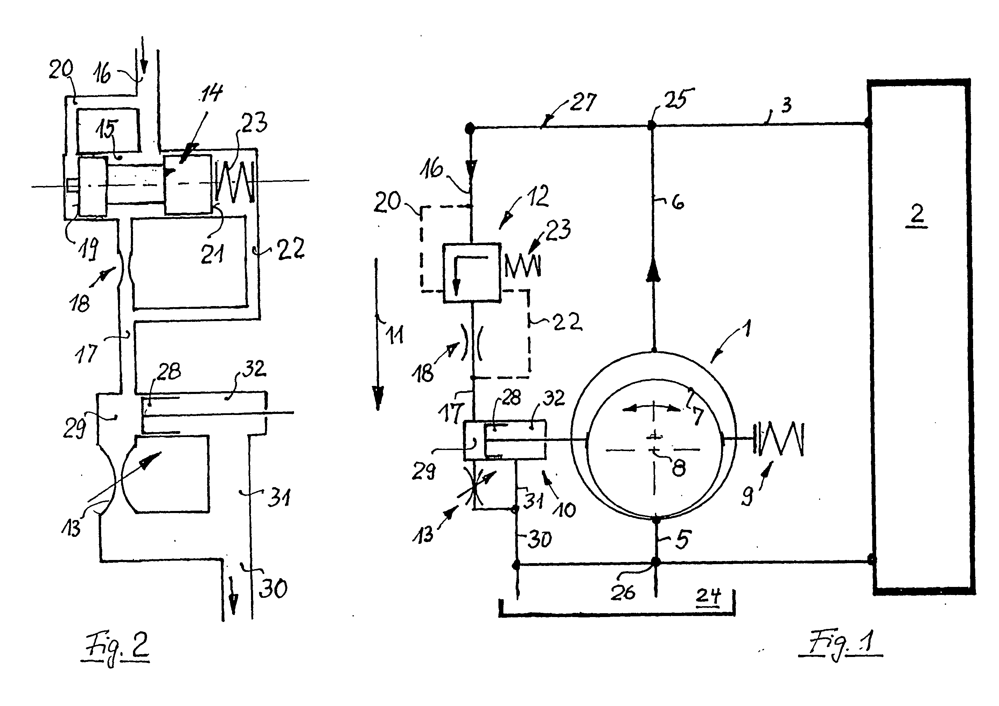

In dem in Fig. 1 dargestellten System der Steuerung einer hydraulischen Verstellpumpe 1 für einen Verbraucher 2 liegt der Verbraucher 2 in einem Versorgungskreis mit einer zwischen einer Saugleitung 5 und einer Druckleitung 6 liegenden Verstellpumpe 1 und Anschluss des Verbrauchers 2 an die Druckleitung 6 über die Zulaufleitung 3 und an die Saugleitung 5 über die Ablaufleitung 4, bei einer saugseitigen Verbindung zum Vorratsbehälter 24. Zwischen druckseitigen und saugseitigen Anschlüssen 25 und 26, veranschaulicht als im Übergang von der Druckleitung 6 auf die Zulaufleitung 3 bzw. von der Ablaufleitung 4 auf die Saugleitung 5 liegend, verläuft ein Rücklauf, symbolisiert durch die Rücklaufleitung 27, in der in der Strömungsrichtung 11 vom druckseitigen Anschluss 25 gegen den saugseitigen Anschluss 26 ein Stromregelventil 12 und ein Stromventil 13 liegen.

Die Verstellpumpe 1 ist stark schematisiert als Flügelzellenpumpe mit einem Hubring 7 veranschaulicht, der relativ zu einem nicht dargestellten Rotor mit gehäusefester Achse 8 zur Veränderung des Fördervolumens der Verstellpumpe 1 verstellbar ist. Als Stelleinrichtung sind einerseits ein Energiespeicher 9, gebildet durch eine Federanordnung, und andererseits - durch eine Zylinder-Kolben-Anordnung veranschaulicht - eine hydraulische Stelleinrichtung 10 vorgesehen. Der Hubring 7 ist über die den Energiespeicher 9 bildende Federanordnung im Sinne des Anhebens des Fördervolumens verstellbar, und bei Beaufschlagung in Gegenrichtung, also entgegen der Federkraft, über die Stelleinrichtung 10 im Sinne eines Absenkens des Fördervolumens.

Die hydraulische Stelleinrichtung 10 liegt bezüglich ihrer Versorgung im Rücklauf 27 zwischen dem Stromregelventil 12 und dem Stromventil 13, das bezüglich seines freien Durchtrittsquerschnittes veränderbar ist und beispielsweise durch eine verstellbare Drossel gebildet ist.

Das Stromregelventil 12 ist ergänzend zu seiner symbolischen Darstellung in Fig. 1 in Fig. 2 schematisiert konstruktiv dargestellt und umfasst eine Druckwaage in Form eines Steuerschiebers 14, der stellungsabhängig über einen Ringkanal 15 den von der Druckseite (Druckleitung 6) ausgehenden Leitungsabschnitt 16 des Rücklaufes 27 mit dem Leitungsabschnitt 17 verbindet, der auf die hydraulische Stelleinrichtung 10 ausläuft und in dem eine Messdrossel 18 liegt. Der Steuerschieber 14 ist stirnseitig jeweils druckbeaufschlagt, und zwar auf seiner Stirnseite 19 hochdruckseitig über die Abzweigung 20 zum Leitungsabschnitt 16, und an seiner gegenüberliegenden Stirnseite 21 über eine stromab der Messdrossel 18 vom Leitungsabschnitt 17 ausgehende Abzweigung 22, wobei sich gegen die Stirnseite 21 zusätzlich eine Kompensationsfeder 23 abstützt.

Die hydraulische Stelleinrichtung 10 ist als Kolben-ZylinderEinheit veranschaulicht, bei Abstützung des Kolbens 28 gegen den Hubring 7 und Einmündung des Leitungsabschnittes 17 auf den über den Kolben 28 abgegrenzten Druckraum 29, der in den das Stromventil 13 enthaltenden Leitungsabschnitt 30 des Rücklaufes 27 übergeht, wobei, wie in Fig. 2 veranschaulicht, dieser Leitungsabschnitt 30 im Querschnitt bezogen auf die maximal auftretende Durchflussmenge so bemessen ist, dass ein nahezu verlustfreier und somit ungedrosselter Ablauf gegen die Saugseite bzw. den Vorratsbehälter 24 möglich ist. Entsprechend ist, was nicht veranschaulicht ist, das als verstellbare Drossel ausgebildete Stromventil 13 voll geöffnet in seinem Durchtrittsquerschnitt an einen derart maximierten Ablaufquerschnitt angepasst.

Im Hinblick auf einen möglichst ungedrosselten Ablauf und eine möglichst schnelle Druckentlastung im Druckraum 29 ist es weiter von Vorteil, wenn eine Zweigleitung 31 zur Leitung 30 auf den Rückraum 32 zum Kolben ausmündet, so dass - schematisiert veranschaulicht - das jeweils bei der Umstellung der Verstellpumpe 1 auf höhere Förderleistung über den Energiespeicher 9 verdrängte Volumen zum Auffüllen von durch die Umstellung entstehenden Hohlräumen genutzt wird. Dies auf kürzestem Wege, wobei sich eine derartige Kurzschlussverbindung insbesondere auch, was nicht dargestellt ist, gehäuseintern in der Verstellpumpe realisieren lässt. Mit einer derartigen Kurzschlussverbindung lassen sich aber nicht nur die Verstellung hemmende Druckunterschiede vermeiden, sondern verbleibende Restdrücke sogar zur Verstellung des Kolbens - ergänzend zur Stellkraft des Energiespeichers 9 - nutzen. Durch eine derartige Kurzschlussverbindung reduziert sich auch der Querschnittsbedarf für die auf den Vorratsbehälter 24 führende Leitung 30.

Erfindungsgemäß wird durch die Maximierung der Ablaufquerschnitte einschließlich des Drosselquerschnittes bei voll geöffneter, das Stromventil 13 bildender Drossel der angestrebte schlagartige Abbau des Druckes im Druckraum 29 erreicht und dies bei geringem Aufwand, wobei mit der hierfür zweckmäßigen harten Auslegung des Energiespeichers bei stets hoher Stellkraft, beispielsweise durch die Verwendung einer Feder hoher Vorspannung und bevorzugt auch hoher Federrate, für die Verstellung in Gegenrichtung zwar geringe Verzögerungen verbunden sein können, diese aber sowohl energetisch wie auch im Hinblick auf die Funktion des Systemes keine merkbaren nachteiligen Auswirkungen nach sich ziehen.

Die Ausgestaltung des Stromregelventiles 12 hat zur Folge, dass bei absinkendem Druck im auf die Stelleinrichtung 10 auslaufenden Leitungsabschnitt 17 über den Steuerschieber 14 der Durchflussquerschnitt vom Leitungsabschnitt 16 auf den Leitungsabschnitt 17 verringert wird, so dass sich bei Erweiterung des Durchtrittsquerschnittes des Stromventiles 13 zunächst ein schneller Druckabbau bezogen auf die hydraulische Stelleinrichtung 10 ergibt. Entsprechend wirkt sich auch eine Druckabsenkung im Leitungsabschnitt 16 aus. Wird somit, ausgehend von einer entsprechenden Ansteuerung des Stromventiles 13 durch Vergrößern des Ablaufquerschnittes die Stelleinrichtung 10 drukkentlastet, so wird gleichzeitig auch der Zulauf auf die Stelleinrichtung über den Leitungsabschnitt 17, wenn auch kurzzeitig, reduziert, bis über das als Druckwaage arbeitende Stromregelventil 12 der Volumenstrom wieder eingeregelt wird. Ein entsprechender Regeleffekt ergibt sich auch bei einer Bedarfsanforderung über den Verbraucher 2 mit Druckabsenkung in der Zulaufleitung 3 und entsprechender Druckabsenkung im Leitungsabschnitt 16 des Rücklaufes 27, so dass auch auf diesem Wege das Ansprechverhalten des Systems positiv beeinflusst wird.

## Patentansprüche

1. System zur Steuerung einer hydraulischen Verstellpumpe für Verbraucher, insbesondere für Aggregate von Fahrzeugen, bei dem die Verstellpumpe in ihrer der Anhebung des Fördervolumens entsprechenden Stellrichtung über einen Energiespeicher und in Gegenrichtung über eine hydraulische Stelleinrichtung beaufschlagt ist, die an einen vom hochdruckseitigen Zulauf auf den Verbraucher abgezweigten, Förderübermengen abführenden und auf einen Vorratsbehälter auslaufenden Rücklauf und in Abhängigkeit vom Rücklaufdruck zwischen einem im Rücklauf liegenden Stromregelventil und einem stromab hierzu liegenden Stromventil gesteuert ist, wobei der Stelleinrichtung eine im Abströmquerschnitt veränderbare Verbindung gegen den Vorratsbehälter zugeordnet ist,
**dadurch gekennzeichnet,**
**dass** das Stromventil (13) die im Abströmquerschnitt veränderbare Verbindung gegen den Vorratsbehälter (24) bildet und die Stelleinrichtung (10) zwischen Stromregelventil (12) und Stromventil (13) im Rücklauf (27) liegt, wobei der über das Stromventil (13) gesteuerte Abströmquerschnitt der Stelleinrichtung (10) gegen den Vorratsbehälter (24) derart gesteuert ist, dass bei Verstellung der Verstellpumpe (1) auf maximales Fördervolumen eine auf einen ungedrosselten Ablauf maximierte Größe des Ablaufquerschnittes gegeben ist.

2. System nach Anspruch 1,
**dadurch gekennzeichnet,**
**dass** das Stromventil (13) in Abhängigkeit von verbraucherseitig vorgegebenen Steuerparametern gesteuert ist.

3. System nach Anspruch 1 oder 2,
**dadurch gekennzeichnet,**
**dass** das Stromventil (13) in Abhängigkeit von durch das Verbraucherumfeld bestimmten Parametern gesteuert ist.

4. System nach einem der vorhergehenden Ansprüchen,
**dadurch gekennzeichnet,**
**dass** das Stromventil (13) durch eine verstellbare Drossel gebildet ist.

5. System nach einem der vorhergehenden Ansprüche,
**dadurch gekennzeichnet,**
**dass** dem den Durchtrittsquerschnitt auf die hydraulische Stelleinrichtung (10) steuernden Stromregelventil (12) in Richtung auf die Stelleinrichtung (10) eine Messdrossel (18) nachgeordnet ist und dass der als Druckwaage ausgebildete Steuerkolben (14) des Stromregelventils (12) einerseits durch die Verbindung zur Druckseite der Verstellpumpe (1) und, in Gegenrichtung hierzu, federbelastet sowie über eine stromab der Messdrossel (18) angeschlossene Abzweigung (22) druckbeaufschlagt ist.

6. System nach einem der vorhergehenden Ansprüche,
**dadurch gekennzeichnet,**
**dass** bei der Verstellung der Stelleinrichtung (10) deren sich gegenläufig ändernde Volumina (Druckraum 29, Rückraum 32) verlustarm kommunizierend verbunden sind.

7. System nach einem der vorhergehenden Ansprüche,
**dadurch gekennzeichnet,**
**dass** als Verbraucher (2) ein Stellmittel eines Servolenksystemes vorgesehen ist.

8. System nach einem der vorhergehenden Ansprüche,
**dadurch gekennzeichnet,**
**dass** als Verbraucher (2) ein Getriebe, insbesondere ein CVT-Getriebe vorgesehen ist.

9. System nach einem der vorhergehenden Ansprüche,
**dadurch gekennzeichnet,**
**dass** die Verstellpumpe (1) als Flügelzellenpumpe ausgebildet ist.

## Claims

1. System for controlling a hydraulic variable displacement pump for consumers, in particular for assemblies of vehicles, in which system the variable displacement pump is acted on via an energy accumulator in its adjusting direction which corresponds to an increase in the delivery volume, and via a hydraulic adjusting device in the opposite direction, which hydraulic adjusting device is connected in a controlled manner to a return line which is branched off from the highpressure inlet to the consumer, leads away excess delivery amounts and runs out to a reservoir, and which hydraulic adjusting device is connected in a controlled manner, as a function of the return-line pressure, between a flow control valve which lies in the return line and a flow valve which lies downstream of the former, the adjusting device being assigned a connection with respect to the reservoir, it being possible to vary the outflow cross section of the said connection, **characterized in that** the flow valve (13) forms the connection with a variable outflow cross section with respect to the reservoir (24) and the adjusting device (10) lies in the return line (27) between the flow control valve (12) and the flow valve (13), the outflow cross section of the adjusting device (10) which is controlled via the flow valve (13) being controlled with respect to the reservoir (24) in such a way that the size of the outflow cross section is maximized for unthrottled outflow if the variable displacement pump (1) is adjusted to its maximum delivery volume.

2. System according to Claim 1, **characterized in that** the flow valve (13) is controlled as a function of control parameters which are stipulated on the consumer side.

3. System according to Claim 1 or 2, **characterized in that** the flow valve (13) is controlled as a function of parameters which are determined by the surroundings of the consumer.

4. System according to one of the preceding claims, **characterized in that** the flow valve (13) is formed by an adjustable throttle.

5. System according to one of the preceding claims, **characterized in that** a measuring throttle (18) is arranged, in the direction of the adjusting device (10), behind the flow control valve (12) which controls the passage cross section to the hydraulic adjusting device (10), and **in that** the control piston (14), which is configured as a pressure compensator, of the flow control valve (12) has pressure applied to it firstly by the connection to the delivery side of the variable displacement pump (1) and, in the opposite direction to this, in a spring-loaded manner and via a branch (22) which is connected downstream of the measuring throttle (18).

6. System according to one of the preceding claims, **characterized in that**, during the adjustment of the adjusting device (10), its volumes which change in opposite directions (pressure space 29, rear space 32) are connected so as to communicate with low losses.

7. System according to one of the preceding claims, **characterized in that** an actuating means of a power steering system is provided as the consumer (2).

8. System according to one of the preceding claims, **characterized in that** a transmission, in particular a CVT transmission, is provided as the consumer (2).

9. System according to one of the preceding claims, **characterized in that** the variable displacement pump (1) is configured as a vane cell pump.

## Revendications

1. Système de commande d'une pompe hydraulique à débit variable pour des dispositifs consommateurs, notamment des appareils de véhicules, dans lequel la pompe à débit variable est sollicitée dans sa direction de réglage correspondant à l'augmentation du volume refoulé par le biais d'un accumulateur d'énergie, et dans la direction opposée par le biais d'un dispositif de réglage hydraulique, qui, au niveau d'un retour bifurquant de l'arrivée du côté haute pression sur le dispositif consommateur, évacuant les quantités refoulées excessives et se terminant dans un récipient de réserve, et en fonction de la pression dans le retour, est commandé entre une soupape de régulation de l'écoulement située dans le retour et une soupape d'écoulement située en aval par rapport à celle-ci, une connexion au récipient de réserve, dont la section transversale d'écoulement de sortie peut être modifiée, étant associée au dispositif de réglage,
**caractérisé en ce que**
la soupape d'écoulement (13) forme la connexion dont la section transversale d'écoulement de sortie peut être modifiée au récipient de réserve (24) et le dispositif de réglage (10) se trouve dans le retour (27) entre la soupape de régulation d'écoulement (12) et la soupape d'écoulement (13), la section transversale d'écoulement de sortie du dispositif de réglage (10) commandée par le biais de la soupape d'écoulement (13) vis-à-vis du récipient de réserve (24) étant commandée de telle sorte que lors du réglage de la pompe à débit variable (1) à son volume de refoulement maximal, on obtienne une dimension de la section transversale de sortie maximisée à une sortie non étranglée.

2. Système selon la revendication 1,
**caractérisé en ce que**
la soupape d'écoulement (13) est commandée en fonction de paramètres de commande prédéfinis du côté du dispositif consommateur.

3. Système selon la revendication 1 ou 2,
**caractérisé en ce que**
la soupape d'écoulement (13) est commandée en fonction de paramètres déterminés par le champ ambiant du dispositif consommateur.

4. Système selon l'une quelconque des revendications précédentes,
**caractérisé en ce que**
la soupape d'écoulement (13) est formée par un étranglement réglable.

5. Système selon l'une quelconque des revendications précédentes,
**caractérisé en ce qu'**un
étranglement de mesure (18) est placé après la soupape de régulation d'écoulement (12) commandant la section transversale de passage sur le dispositif de réglage hydraulique (10) dans la direction du dispositif de réglage (10), et **en ce que** le piston de commande (14) de la soupape de régulation d'écoulement (12) réalisé sous forme de balance de pression est sollicité par ressort d'une part par la connexion au côté refoulement de la pompe à débit variable (1) et dans la direction opposée à celle-ci, et est sollicité en pression par le biais d'une dérivation (22) raccordée en aval de l'étranglement de mesure (18).

6. Système selon l'une quelconque des revendications précédentes,
**caractérisé en ce que**
lors du réglage du dispositif de réglage (10), ses volumes variant en sens contraire (espace de pression 29, espace de retour 32) sont connectés de manière à communiquer avec peu de pertes.

7. Système selon l'une quelconque des revendications précédentes,
**caractérisé en ce que**
l'on prévoit en tant que dispositif consommateur (2) un moyen de réglage d'un système de direction assistée.

8. Système selon l'une quelconque des revendications précédentes,
**caractérisé en ce que**
l'on prévoit en tant que dispositif consommateur (2) une transmission, notamment une transmission à variation continue CVT.

9. Système selon l'une quelconque des revendications précédentes,
**caractérisé en ce que**
la pompe à débit variable (1) est réalisée en tant que pompe à palettes.
